# FASCICULE DE BREVET EUROPEEN

(11) **EP 0 877 689 B1**
(45) Date de publication et mention de la délivrance du brevet: **19.12.2001**
(21) Numéro de dépôt: 96941692.4
(22) Date de dépôt: 04.12.1996
(51) Int. Cl.: B60T 13/569, B60T 13/57

(54) **SERVOMOTEUR PNEUMATIQUE D'ASSISTANCE AU FREINAGE A CLAPET PERFECTIONNE**
BREMSKRAFTVERSTÄRKER MIT VERBESSERTEM VENTIL
BRAKING ASSISTANCE PNEUMATIC SERVOMOTOR WITH IMPROVED VALVE

(30) Priorité: 30.01.1996 FR 9601044
(43) Date de publication de la demande: 18.11.1998
(73) Titulaire: Bosch Systemes de Freinage, 93700 Drancy (FR)
(72) Inventeur: GAUTIER, Jean, Pierre, F-93600 Aulnay-sous-Bois (FR); VERBO, Ulysse, F-93600 Aulnay-sous-Bois (FR)
(86) Numéro de dépôt international: FR9601929
(87) Numéro de publication internationale: WO9728032

(56) Documents cités:
- GB-A- 2 161 232

## Description

La présente invention concerne les servomoteurs pneumatiques, du type de ceux qui sont utilisés pour fournir une assistance au freinage des véhicules automobiles.

De tels servomoteurs sont bien connus dans la technique automobile et comportent de façon classique une enveloppe possédant un axe de symétrie, séparée de façon étanche par au moins une structure de paroi mobile en une chambre avant reliée en permanence à une source de basse pression, et une chambre arrière reliée sélectivement à la chambre avant ou à une source de haute pression par un moyen de valve à trois voies actionnée par une tige de commande susceptible de s'appuyer, par l'intermédiaire de la face avant d'un plongeur, sur la face arrière d'une tige de poussée solidaire d'un disque de réaction, le plongeur coulissant dans un alésage de la paroi mobile, la valve à trois voies comportant un élément de clapet disposé dans une partie arrière tubulaire de la paroi mobile et coopérant par une face avant annulaire avec un premier siège de clapet formé sur le plongeur et avec un second siège de clapet formé sur la paroi mobile, un espace étant ménagé entre les deux sièges de clapet et communiquant avec au moins un passage radial formé dans la paroi mobile et débouchant dans la chambre arrière, au moins un passage axial étant formé dans la paroi mobile et débouchant dans la chambre avant, la face avant annulaire de l'élément de clapet étant sollicitée en direction des sièges de clapet par un ressort de clapet.

De très nombreux documents illustrent ce type de servomoteurs, comme par exemple le document GB-A-2 095 778. On a depuis longtemps cherché à améliorer les performances de ces servomoteurs, et en particulier à diminuer le temps de réponse, de façon à obtenir un actionnement rapide des freins lors d'une sollicitation de la pédale de frein, et également le temps de retour, de façon à ce que le conducteur puisse doser précisément son action de freinage.

L'amélioration du temps de réponse est obtenue en augmentant la section de passage de l'air au niveau du premier siège annulaire de clapet, et généralement en augmentant son diamètre. Par contre, lorsqu'on désire obtenir une diminution le temps de retour du servomoteur, cela impose de réduire le diamètre du second siège annulaire de clapet. Ces deux améliorations sont ainsi antinomiques, puisque, dans cette conception de servomoteur, les sièges de clapet sont sensiblement situés dans un mème plan et que le diamètre du premier siège de clapet est limité, entre autres paramètres, par le diamètre du le second siège de clapet.

La présente invention se place dans ce contexte et a pour objet de proposer un servomoteur, du type rappelé ci-dessus, dans lequel on obtienne à la fois une réduction des temps de réponse et de retour, par des moyens simples à mettre en oeuvre et fiables, et de plus en ne modifiant qu'un minimum de composants d'un servomoteur classique de façon à utiliser un maximum de pièces déjà en production et ainsi ne pas augmenter le coût du servomoteur.

Dans ce but, la présente invention prévoit que le second siège de clapet formé sur la paroi mobile soit formé par la réunion d'au moins deux arcs de cercle concentriques, coplanaires et de rayons différents.

De préférence, le second siège de clapet formé sur la paroi mobile comporte au moins un premier arc de cercle sensiblement dans un secteur angulaire où l'espace communique directement avec le passage radial, et au moins un deuxième arc de cercle sensiblement dans un secteur angulaire où est formé le passage axial débouchant dans la chambre avant.

De façon avantageuse, le rayon du premier arc de cercle est supérieur au rayon du deuxième arc de cercle.

Selon un mode avantageux de réalisation, le passage axial débouchant dans la chambre avant est partiellement formé par une gorge axiale pratiquée dans la partie tubulaire arrière de la paroi mobile.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 représente une vue de côté, en coupe longitudinale, de la partie centrale arrière d'un servomoteur pneumatique d'assistance au freinage, réalisé conformément à la présente invention;
- La Figure 2 représente une vue en coupe selon la ligne II-II de la Figure 1.

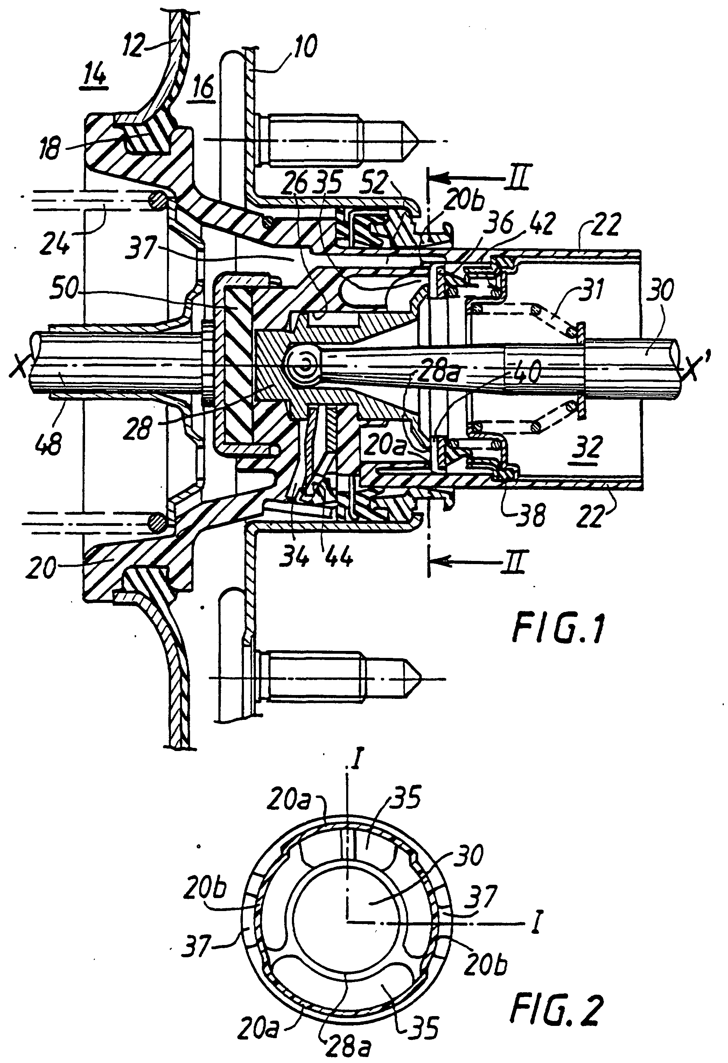

La Figure 1 représente une vue en coupe la partie centrale arrière d'un servomoteur pneumatique d'assistance au freinage prévu pour être placé de façon conventionnelle entre la pédale de frein d'un véhicule et la maître-cylindre commandant la pression dans le circuit de freinage hydraulique de ce véhicule.

Par convention, on appelle "avant" du servomoteur la partie de ce dernier tournée vers le maître-cylindre et "arrière" du servomoteur la partie tournée vers la pédale de frein. Sur la Figure 1, l'avant est ainsi à gauche et l'arrière à droite.

Le servomoteur représenté sur la Figure 1 comprend un enveloppe extérieure 10 en forme de coquille, présentant une symétrie de révolution autour d'un axe X-X'. Seule la partie centrale arrière de cette enveloppe 10 est représentée sur la Figure 1.

Une structure de paroi mobile 12 délimite à l'intérieur de l'enveloppe 10 une chambre avant 14 et une chambre arrière 16. La paroi mobile 12 est associée à une membrane déroulante souple en élastomère dont le bord périphérique intérieur est reçu de façon étanche grâce à un bourrelet 18 dans un piston creux d'assistance 20 disposé selon l'axe X-X' du servomoteur, et dont le bord périphérique extérieur (non représenté) est fixé de façon étanche sur l'enveloppe extérieure 10.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant (non représentée) de l'enveloppe 10 maintient normalement le piston 20 dans la position arrière de repos illustrée sur la Figure 1, dans laquelle la chambre arrière 16 présente son volume minimal et la chambre avant 14 son volume maximal.

Dans la partie centrale de la paroi mobile située en avant de la partie tubulaire arrière 22, le piston 20 présente un alésage étagé 26 dans lequel est reçu en coulissement un plongeur 28. L'extrémité avant d'une tige de commande 30 du servomoteur, disposée également selon l'axe X-X', est montée rotulante dans un alésage borgne du plongeur 28.

L'extrémité arrière (non représentée) de la tige de commande 30, qui fait saillie à l'extérieur de la partie tubulaire 22, est commandée directement par la pédale de frein du véhicule (non représentée), et est rappelée dans sa position de repos par un ressort de rappel 31.

L'espace annulaire 32 autour de la tige de commande 30 peut communiquer avec la chambre arrière 16 au travers d'un passage radial 34 formé dans la partie centrale du piston 20, lorsque des moyens d'assistance commandés par le plongeur 28 sont actionnés.

De façon connue par exemple par le document précité, ces moyens d'assistance comprennent une valve à trois voies comportant un clapet annulaire 36 et deux sièges de clapet 20a et 28a formés respectivement à l'arrière de la partie centrale du piston 20 et à l'arrière du plongeur 28, le siège 20a entourant le siège 28a, un espace 35 étant ménagé entre ces deux sièges et communiquant avec le passage radial 34.

Le clapet 36 constitue l'extrémité avant, de plus petit diamètre, d'un manchon tubulaire souple en élastomère dont l'extrémité arrière 38 est fixée de façon étanche dans la partie tubulaire 22, et il présente une face avant annulaire 40 mobile suivant l'axe X-X', cette face avant étant sollicitée vers l'avant par un ressort de clapet 42 pour la faire coopérer séparément ou en combinaison avec le siège de clapet 20a et avec le siège de clapet 28a

D'une manière classique, selon la position du plongeur 28 à l'intérieur de l'alésage 26, l'un des passages de valve 20a-40 ou 28a-40 est ouvert, soit pour faire communiquer l'espace annulaire 32 avec le passage radial 34 et la chambre arrière 16 lors d'une action de freinage, soit pour faire communiquer l'espace 35 avec un passage sensiblement axial 37 formé dans la partie centrale du piston 20 et débouchant dans la chambre avant 14 lors du retour du servomoteur en position de repos.

Enfin, au moins un organe de butée 44 monté dans la partie centrale du piston 20 délimite la course axiale du plongeur 28 à l'intérieur de l'alésage 26. Le plongeur 28 est normalement maintenu dans sa position arrière de repos définie par l'organe 44 au moyen du ressort de rappel 31.

On comprend donc que, comme on l'a expliqué plus haut, la diminution du temps de réponse du servomoteur est obtenue par un accroissement de la section de passage de l'air entre l'espace annulaire 32 et la chambre arrière 16, c'est à dire en augmentant le diamètre du siège de clapet 28a, ce qui conduit, si on veut éviter que l'espace 35 n'introduise à son tour une restriction dans le trajet de l'air vers la chambre arrière, à augmenter également le diamètre du siège de clapet 20a. Cette dernière augmentation conduit à son tour à une diminution de la section du passage axial 37, et donc à une dégradation du temps de retour du servomoteur.

On comprendra que, inversement, la diminution du temps de retour du servomoteur impose une augmentation de la section du passage 37, donc une diminution du diamètre du siège de clapet 20a, et par conséquent une diminution du diamètre du siège de clapet 28a, ce qui se traduit par une augmentation du temps de réponse du servomoteur.

Un tel problème est résolu dans l'art antérieur en essayant de trouver un compromis entre les sections des passages 35 et 37 et les diamètres des sièges de clapet annulaires 20a et 28a.

Conformément à la présente invention, ce problème est résolu en prévoyant un moyen de valve à trois voies permettant des sections de passage optimales pour améliorer à la fois le temps de réponse et le temps de retour.

Comme on l'a représenté sur les Figures, on prévoit de réaliser le siège de clapet formé sur le piston 20 par la réunion d'au moins deux arcs de cercle 20a et 20b concentriques, coplanaires, et de rayons différents.

De façon plus précise, et comme on le voit bien en particulier sur la Figure 2, dans la zone du piston 20 dans laquelle est formé un passage axial 37, le piston 20 est formé avec un siège de clapet 20b, et dans la zone du piston 20 dans laquelle est formé un passage 35 communiquant avec un passage radial 34, le piston 20 est formé avec un siège de clapet 20a, dont le rayon est supérieur à celui du siège de clapet 20b.

Lorsque le servomoteur est dans sa position de repos, la position arrière du plongeur 28, telle que définie par l'organe de butée 44, est telle que le siège de clapet 28a est en appui sur la face avant annulaire 40 de l'élément de clapet 36 et maintient cette dernière éloignée des sièges 20a et 20b, de telle sorte que les chambres avant 14 et 16 du servomoteur communiquent par l'intermédiaire du passage axial 37, du passage de valve 20b-40, et les passages 35 et 34.

Lors d'une action de freinage, le conducteur du véhicule appuie sur la pédale de frein pour faire avancer la tige de commande 30. Le plongeur 28 coulisse dans l'alésage 26, de sorte que la face avant annulaire 40 vient au contact des sièges 20a et 20b, isolant ainsi les chambres avant et arrière l'une de l'autre.

Le plongeur 28 continuant d'avancer dans l'alésage 26, le siège de clapet 28a s'éloigne de la face avant annulaire 40, ce qui met l'espace annulaire 32 en communication avec la chambre arrière 16 par l'intermédiaire des passages 35 et 34.

Grâce à l'invention, comme on le voit sur la Figure 2 et sur la moitié inférieure de la Figure 1, dans le secteur angulaire par rapport à l'axe X-X' où le passage 35 communique directement avec le passage 34, le siège de clapet 20a formé sur le piston est suffisamment éloigné de l'axe X-X' pour que le passage 35 ait une section maximale, et donc que le temps de réponse du servomoteur soit minimal.

La pression peut ainsi augmenter rapidement dans la chambre arrière 16 du servomoteur et créer une différence de pressions sur la paroi mobile 12, engendrant une force d'assistance qui tend à la déplacer vers l'avant, cette force étant transmise à une tige de poussée 48 par une face avant annulaire du piston 20 agissant sur un disque de réaction 50, sur la partie centrale duquel est en appui la face avant du plongeur 28.

Lorsque le conducteur du véhicule désire réduire son action de freinage ou y mettre fin, il relâche son effort sur la tige de commande 30 qui, sous l'effet du ressort de rappel 31, revient en arrière en entraînant avec elle le plongeur 28.

Le siège de clapet 28a vient dans un premier temps au contact de la face avant annulaire 40, interrompant ainsi la communication entre l'espace annulaire 32 et la chambre arrière 16. Puis, le siège de clapet 28a soulève vers l'arrière la face avant annulaire 40 des sièges de clapet 20a et 20b, mettant ainsi en communication les chambres avant et arrière du servomoteur.

On voit là encore, en particulier sur la Figure 2 et sur la moitié supérieure de la Figure 1, que, grâce à l'invention, dans le secteur angulaire par rapport à l'axe X-X' où est formé le passage 37, le siège de clapet 20b formé sur le piston est suffisamment proche de l'axe X-X' pour que le passage 37 ait une section maximale, et donc que le temps de retour du servomoteur soit minimal.

Pour améliorer encore le temps de retour du servomoteur, on pourra prévoir, comme on l'a représenté sur la moitié supérieure de la Figure 1, que le passage axial 37 soit partiellement formé par une gorge axiale 52 pratiquée dans l'épaisseur de la partie tubulaire arrière 22 du piston 20. Une telle disposition permet d'agrandir d'autant le diamètre du siège de clapet 20b sans influer sur le temps de retour, une augmentation de diamètre correspondante pouvant alors être apportée au diamètre du siège de clapet 28a, ce qui améliore le temps de réponse.

On voit donc bien qu'on a réalisé un servomoteur dans lequel on peut influer sur le temps de réponse et sur le temps de retour indépendamment l'un de l'autre, et en particulier pour les améliorer tous deux simultanément. Une telle amélioration simultanée est obtenue par des moyens simples, puisqu'ils ne concernent que le siège de clapet formé sur le piston. Les pistons de servomoteur étant généralement obtenus par moulage d'une matière thermoplastique, les moyens à mettre en oeuvre sont donc particulièrement simples, fiables et peu onéreux. De plus, les autres composants du servomoteur, tels que l'enveloppe extérieure et la paroi mobile solidaire du piston, peuvent être utilisés pour mettre en oeuvre la présente invention, ce qui contribue encore à en diminuer le coût.

Bien entendu, l'invention n'est pas limitée aux modes de réalisation qui ont été décrits, mais elle est susceptible au contraire de recevoir de nombreuses modifications qui apparaîtront à l'homme du métier. C'est ainsi que l'invention est bien entendu applicable de la même façon à des servomoteurs de type tandem ou à chambres additionnelles.

## Revendications

1. Servomoteur pneumatique d'assistance au freinage, comportant une enveloppe (10) possédant un axe de symétrie (X-X'), séparée de façon étanche par au moins une structure de paroi mobile (12) en une chambre avant (14) reliée en permanence à une source de basse pression, et une chambre arrière (16) reliée sélectivement à la chambre avant (14) ou à une source de haute pression par un moyen de valve à trois voies (36) actionnée par une tige de commande (30) susceptible de s'appuyer, par l'intermédiaire de la face avant d'un plongeur (28), sur la face arrière d'une tige de poussée (48) solidaire d'un disque de réaction (50), le plongeur (28) coulissant dans un alésage (26) de la paroi mobile (12), la valve à trois voies (36) comportant un élément de clapet (36) disposé dans une partie arrière tubulaire (22) de la paroi mobile (12) et coopérant par une face avant annulaire (40) avec un premier siège de clapet (28a) formé sur le plongeur (28) et avec un second siège de clapet (20a, 20b) formé sur la paroi mobile (12), un espace (35) étant ménagé entre les deux sièges de clapet et communiquant avec au moins un passage radial (34) formé dans la paroi mobile (12) et débouchant dans la chambre arrière (16), au moins un passage axial (37) étant formé dans la paroi mobile (12) et débouchant dans la chambre avant (14), la face avant annulaire (40) de l'élément de clapet étant sollicitée en direction des sièges de clapet par un ressort de clapet (42), **caractérisé en ce que** le second siège de clapet (20a, 20b) formé sur la paroi mobile (12) est formé par la réunion d'au moins deux arcs de cercle (20a, 20b) concentriques, coplanaires et de rayons différents.

2. Servomoteur pneumatique, selon la revendication 1, **caractérisé en ce que** le second siège de clapet (20a, 20b) formé sur la paroi mobile (12) comporte au moins un premier arc de cercle (20a) sensiblement dans un secteur angulaire où l'espace (35) communique directement avec le passage radial (34), et au moins un deuxième arc de cercle (20b) sensiblement dans un secteur angulaire où est formé le passage axial (37) débouchant dans la chambre avant (14).

3. Servomoteur pneumatique selon la revendication 2, **caractérisé en ce que** le rayon du premier arc de cercle (20a) est supérieur au rayon du deuxième arc de cercle (20b).

4. Servomoteur pneumatique selon la revendication 3, **caractérisé en ce que** le passage axial (37) débouchant dans la chambre avant (14) est partiellement formé par une gorge axiale (52) pratiquée dans la partie tubulaire arriére (22) de la paroi mobile (12).

## Patentansprüche

1. Pneumatischer Bremskraftverstärker, der ein Gehäuse (10) mit einer Symmetrieachse (X-X') aufweist, das in dichter Weise durch wenigstens eine bewegliche Wandstruktur (12) in eine vordere Kammer (14), die stets mit einer Unterdruckquelle verbunden ist, und eine hintere Kammer (16) unterteilt ist, die wahlweise mit der vorderen Kammer (14) oder einer Hochdruckquelle durch eine Dreiwegeventil-Anordnung (36) verbunden ist, die durch eine Steuerstange (30) betätigt wird, die sich über die vordere Seite eines Tauchkolbens (28) auf der hinteren Seite eines Druckkolbens (48), der mit einer Reaktionsscheibe (50) fest verbunden ist, abstützen kann, wobei der Tauchkolben (28) in einer Bohrung (26) der beweglichen Wandstruktur (12) gleitet, wobei das Dreiwegeventil (36) ein Ventilelement (36) aufweist, das in einem hinteren, ringförmigen Teil (22) der beweglichen Wandstruktur (12) angeordnet ist und mittels einer vorderen, ringförmigen Seite (40) mit einem ersten, auf dem Tauchkolben (28) gebildeten Ventilsitz (28a) und einem zweiten, auf der mobilen Wandstruktur (12) gebildeten zweiten Ventilsitz (20a, 20b) zusammenwirkt, wobei ein Raum (35) zwischen den beiden Ventilsitzen angeordnet und mit wenigstens einer radialen Durchführung (34) verbunden ist, die in der mobilen Wandstruktur (12) ausgebildet ist und in der hinteren Kammer (16) mündet, wobei wenigstens eine axiale Durchführung (37) in der mobilen Wandstruktur (12) gebildet ist und in der vorderen Kammer (14) mündet, wobei die vordere, ringförmige Seite (40) des Ventilelements in Richtung der Ventilsitze durch eine Ventilfeder (42) beaufschlagt ist, **dadurch gekennzeichnet, daß** der zweite Ventilsitz (20a, 20b), der auf der mobilen Wandstruktur (12) gebildet ist, aus der Verbindung von wenigstens zwei konzentrischen, koplanaren Kreisbögen (20a, 20b) verschiedener Radien gebildet ist.

2. Pneumatischer Bremskraftverstärker nach Anspruch 1, **dadurch gekennzeichnet, daß** der zweite Ventilsitz (20a, 20b), der auf der mobilen Wandstruktur (12) gebildet ist, wenigstens einen ersten Kreisbogen (20a), im wesentlichen in einem Winkelbereich, in dem der Raum (35) direkt mit der radialen Durchführung (34) verbunden ist, und wenigstens einen zweiten Kreisbogen (20b) aufweist, im wesentlichen in einem Winkelbereich, in dem die axiale Durchführung (37) gebildet ist, die in der vorderen Kammer (14) mündet.

3. Pneumatischer Bremskraftverstärker nach Anspruch 2, **dadurch gekennzeichnet, daß** der Radius des ersten Kreisbogens (20a) größer ist als der Radius des zweiten Kreisbogens (20b).

4. Pneumatischer Bremskraftverstärker nach Anspruch 3, **dadurch gekennzeichnet, daß** die axiale Durchführung (37), die in der vorderen Kammer (14) mündet, teilweise durch eine axiale Rille (52) gebildet ist, die in dem hinteren, ringförmigen Teil (22) der mobilen Wandstruktur (12) ausgebildet ist.

## Claims

1. A pneumatic booster for braking assistance, comprising an envelope (10) having an axis of symmetry (X-X'), separated sealingly by at least one movable partition structure (12) into a front chamber (14) connected permanently to a source of low pressure, and a rear chamber (16) connected selectively to the front chamber (14) or to a source of high pressure by a three way valve means (36) actuated by a control rod (30) capable of bearing, through the intermediary of the front face of a plunger (28), on the rear face of a thrust rod (48) solid with a reaction disc (50), the plunger (28) sliding in a bore (26) in the movable partition (12), the three way valve (36) comprising a valve member (36) disposed in a tubular rear part (22) of the movable partition (12) and co-operating through an annular front face (40) with a first valve seat (28a) formed on the plunger (28) and with a second valve seat (20a, 20b) formed on the movable partition (12), a space (35) being arranged between the two valve seats and communicating with at least one radial passage (34) formed in the movable partition (12) and opening out into the rear chamber (16), at least one axial passage (37) being formed in the movable partition (12) and opening into the front chamber (14), the annular front face (40) of the valve member being urged in the direction of the valve seats by a valve spring (42), **characterised in that** the second valve seat (20a, 20b) formed on the movable partition (12) is formed by bringing together at least two circular arcs (20a, 20b) which are concentric, coplanar and of different radiuses.

2. A pneumatic booster according to claim 1, **characterised in that** the second valve seat (20a, 20b) formed on the movable partition (12) comprises at least a first circular arc (20a) substantially in an angular sector where the space (35) communicates directly with the radial passage (34) and at least a second circular arc (20b) substantially in an angular sector where the axial passage (37) is formed which opens out into the front chamber (14).

3. A pneumatic booster according to claim 2, **characterised in that** the radius of the first circular arc (20a) is greater than the radius of the second circular arc (20b).

4. A pneumatic booster according to claim 3, **characterised in that** the axial passage (37) which opens out into the front chamber (14) is partially formed by an axial groove (52) formed in the rear tubular part (22) of the movable partition (12).
